(19) Europäisches Patentamt
European Patent Office
Office européen des brevets

(11) EP 3 181 355 A1

(12) EUROPEAN PATENT APPLICATION
published in accordance with Art. 153(4) EPC

(43) Date of publication:
21.06.2017 Bulletin 2017/25

(51) Int Cl.:
B32B 27/18 (2006.01)   B29C 45/14 (2006.01)
B29C 69/00 (2006.01)   B32B 7/02 (2006.01)
B32B 27/30 (2006.01)

(21) Application number: 15832628.0

(22) Date of filing: 11.08.2015

(86) International application number:
PCT/JP2015/072778

(87) International publication number:
WO 2016/024592 (18.02.2016 Gazette 2016/07)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(30) Priority: 13.08.2014   JP 2014164883
09.04.2015   JP 2015080180

(71) Applicant: Mitsubishi Rayon Co., Ltd.
Tokyo 100-8253 (JP)

(72) Inventors:
• SANEFUJI, Koichiro
Otake-shi
Hiroshima 739-0693 (JP)
• KAWAGUCHI, Yuji
Toyohashi-shi
Aichi 440-8601 (JP)
• KAWASE, Yasunori
Otake-shi
Hiroshima 739-0693 (JP)
• OAIRA, Kazuya
Otake-shi
Hiroshima 739-0693 (JP)

(74) Representative: Merkle, Gebhard
Ter Meer Steinmeister & Partner
Patentanwälte mbB
Nymphenburger Straße 4
80335 München (DE)

(54) LAMINATE FILM, MOLDED LAMINATE, AND METHOD FOR PRODUCING SAME

(57) Provided is a laminate film that exhibits an excellent appearance, chemical resistance, and weather resistance, and suppresses yellowing even after long-term heating. The laminate film is formed from a surface layer including a vinylidene fluoride resin (F) and an acrylic resin composition (Y) layer, the acrylic resin composition (Y) containing a hindered amine light stabilizer having a molecular weight of 1400 or more. Further provided is a molded laminate including a base material and the laminate film laminated to the base material. Further provided is a method for producing a molded laminate including a step for producing a preform body by vacuum forming or pressure forming the laminate film in a first die, and a step for integrating the preform body and the base material by injection molding the resin that is to be the base material in a second die.

EP 3 181 355 A1

**Description**

TECHNICAL FIELD

The present invention relates to a laminate film, a molded laminate using the laminate film, and a method for producing the same.

BACKGROUND ART

As a method for providing a molded article with a design property at low cost, there is an insert molding or an in-mold molding. The insert molding is a method in which a film or sheet of a polyester resin, a polycarbonate resin, or an acrylic resin which has been decorated by, for example, printing, is molded in advance into a molded article with a three-dimensional shape by, for example, vacuum molding to remove an unnecessary part of the film or sheet, then the molded article with a three-dimensional shape is transferred into a die for injection molding, and a resin to be a base is subjected to injection molding to thereby obtain a molded article in which the molded article with a three-dimensional shape is integrated with a base.

On the other hand, the in-mold molding is a method in which a film or sheet of a polyester resin, a polycarbonate resin, or an acrylic resin which has been decorated by, for example, printing, is placed in a die for injection molding and then vacuum molded, and a resin to be a base is subjected to injection molding in the same die to thereby obtain a molded article in which the base is integrated with the film or sheet.

In Patent Literature 1, a laminate film which has enhanced chemical resistance according to placing of a vinylidene fluoride-based resin on a surface layer of an acrylic resin film is disclosed. In Patent Literature 2, a vinylidene fluoride-based resin film which hardly exhibits, according to inclusion of an organic acid in the vinylidene fluoride-based resin, an occurrence of yellowing in moisture-resistant durability test is disclosed.

CITATION LIST

PATENT LITERATURE

Patent Literature 1: JP 03-288640 A
Patent Literature 2: JP 2013-104022 A

SUMMARY OF THE INVENTION

PROBLEM TO BE SOLVED BY THE INVENTION

In general, to protect a decorative layer like printing carried out on a molded article from deterioration caused by ultraviolet ray, a ultraviolet absorbing agent and a hindered amine-based light stabilizer are added to a film or sheet of a polyester resin, a polycarbonate resin, or an acrylic resin. However, in a laminate film in which a vinylidene fluoride-based resin is placed in a surface layer to have chemical resistance or an antifouling property, it is known that, as the vinylidene fluoride-based resin is relatively easily infiltrated by a base, coloration is caused based on a de-fluorination reaction. For such reasons, there has been a case in which yellowing of a vinylidene fluoride-based resin in an adjacent surface layer is caused by a hindered amine-based light stabilizer that is present in a layer of an acrylic resin or the like.

In Patent Literature 2, it is disclosed that, by including an organic acid in a vinylidene fluoride-based resin film, yellowing of a vinylidene fluoride-based resin film which is adjacent to a resin layer including a hindered amine-based light stabilizer can be suppressed. However, the vinylidene fluoride-based resin including an organic acid may have generation of a heat degradation product during kneading by an extruder, and there are cases in which poor appearance of a film is caused by the heat degradation product.

An object of the invention is to provide a laminate film that exhibits, by having an excellent appearance, chemical resistance, and weather resistance, suppressed yellowing even after long term heating, a molded laminate using the laminate film, and a method for producing the same.

MEANS FOR SOLVING PROBLEM

The above problems are solved by any one of the inventions [1] to [16] described below.

[1] A laminate film consisting of a surface layer including a vinylidene fluoride-based resin (F) and a layer of an acrylic resin composition (Y), in which the acrylic resin composition (Y) contains a hindered amine-based light stabilizer having a molecular weight of 1400 or more.

[2] The laminate film described in above [1], in which the surface layer additionally includes an acrylic resin ($A_F$).

[3] The laminate film described in above [1] or [2], in which the surface layer additionally includes an acrylic resin ($A_F$), content ratio of the vinylidene fluoride-based resin (F) in total 100% by mass of the vinylidene fluoride-based resin (F) and the acrylic resin ($A_F$) in the surface layer is 62% by mass or more, and content ratio of the acrylic resin ($A_F$) is 38% by mass or less.

[4] The laminate film described in any one of above [1] to [3], in which the surface layer additionally includes an acrylic resin ($A_F$), content ratio of the vinylidene fluoride-based resin (F) in total 100% by mass of the vinylidene fluoride-based resin (F) and the acrylic resin ($A_F$) in the surface layer is 62% by mass or more and 78% by mass or less, and content ratio of the acrylic resin ($A_F$) is 22% by mass or more and 38% by mass or less.

[5] The laminate film described in any one of above [1] to [4], in which content ratio of the hindered amine-based light stabilizer in the acrylic resin composition (Y) is 0.1 to 5 parts by mass relative to 100 parts by mass of a resin component in the acrylic resin composition (Y).

[6] The laminate film described in any one of above [1] to [5], in which the molecular weight of the hindered amine-based light stabilizer is 2000 or more.

[7] The laminate film described in any one of above [1] to [6], in which the molecular weight of the hindered amine-based light stabilizer is 2400 or more.

[8] The laminate film described in any one of above [1] to [7], in which 10% mass reduction temperature of the hindered amine-based light stabilizer is 380°C or higher based on thermogravimetric analysis.

[9] The laminate film described in any one of above [1] to [8], in which the hindered amine-based light stabilizer has, in the molecular structure, a piperidine skeleton and an amino group other than the piperidine skeleton.

[10] The laminate film described in any one of above [1] to [9], in which the amino group is an amino group derived from a tertiary amine.

[11] The laminate film described in any one of above [1] to [10], in which the hindered amine-based light stabilizer is a copolymer of a reactive hindered amine-based light stabilizer.

[12] The laminate film described in any one of above [1] to [11], in which the acrylic resin composition (Y) additionally contains a hindered amine-based light stabilizer having a molecular weight of less than 1400, and content ratio of the hindered amine-based light stabilizer relative to 100 parts by mass of a resin component in the acrylic resin composition (Y) is 1 part by mass or less.

[13] The laminate film described in any one of above [1] to [12], in which the surface layer additionally contains a hindered amine-based light stabilizer, and content ratio of the hindered amine-based light stabilizer relative to 100 parts by mass of a resin component in the surface layer is 0.1 part by mass or less.

[14] A molded laminate including a base and the laminate film described in any one of above [1] to [13] that is laminated on the base.

[15] A method for producing a molded laminate, including: a step for producing a preliminary molded article by vacuum molding or pressure molding the laminate film described in any one of above [1] to [14] in a first die; and a step for integrating the preliminary molded article and a base by injection molding a resin that is to be the base in a second die.

[16] A laminate film consisting of a surface layer including a vinylidene fluoride-based resin (F) and a layer of an acrylic resin composition (Y), in which an increase amount of yellowness (ΔYI) after heating for 500 hours in an atmosphere with temperature of 100°C is 3.0 or less when compared to before heating, and light transmittance $T_{1080}$ at wavelength of 323 nm after having exposure till to have integrated light amount of 1080 MJ/m$^2$ by using an ultra accelerated weathering tester (manufactured by Iwasaki Electric Co., Ltd., product name: SUV-F1) is 20% or less.

EFFECT OF THE INVENTION

According to the invention, a laminate film that exhibits, by having an excellent appearance, chemical resistance, and weather resistance, suppressed yellowing even after long term heating, a molded laminate using the laminate film, and a method for producing the same can be provided.

MODE(S) FOR CARRYING OUT THE INVENTION

Hereinbelow, explanations are given for a preferred mode of the laminate film, molded laminate, and a method for producing the same of the invention. Incidentally, in the invention, the film indicates a flat plate material with thickness of 0.01 to 0.5 mm.

<Laminate film>

The laminate film of the invention consists of a surface layer including a vinylidene fluoride-based resin (F) (hereinbelow, it may be referred to as "layer (F)" or "film (F)") and a layer of an acrylic resin composition (Y) (hereinbelow, it may be referred to as "layer (Y)" or "film (Y)"). Incidentally, it is sufficient that the laminate film consists of the layer (F) and the layer (Y) and the layer (F) is present on a surface of the laminate film. For example, it can have a bilayer constitution consisting of the layer (F) and the layer (Y) or a trilayer constitution in which the layer (F) is present on both sides of the layer (Y).

<Constitution of laminate film>

If the laminate film of the invention is excessively thin, low mechanical strength is yielded. On the other hand, if it is excessively thick, poor transparency is yielded. For such reasons, the thickness of a laminate film (whole thickness) is preferably 25 $\mu$m or more and 175 $\mu$m or less.

The thickness ratio of the layer (F) and the layer (Y) of a laminate film, i.e., "layer (F)/layer (Y)", is preferably 1/25 or more and 1/4 or less (0.04 or more and 0.25 or less). As the thickness ratio is 1/25 or more, deterioration of appearance caused by roughness on a film surface on the layer (F) side can be easily prevented. Furthermore, as the thickness ratio is 1/4 or less, the film surface on the layer (F) side has excellent gloss. The thickness ratio is more preferably 1/25 or more and 1/9 or less (0.04 or more and 0.11 or less).

<Surface layer>

It is sufficient for the surface layer to contain the vinylidene fluoride-based resin (F) (hereinbelow, it may be referred to as "resin (F)"), and, other than that, it may contain other components like the acrylic resin ($A_F$) (hereinbelow, referred to as "resin ($A_F$)) and a blending agent described below. Incidentally, the surface layer may be a solidified product of a resin composition for forming a surface layer which contains the vinylidene fluoride-based resin (F), and, if necessary, the acrylic resin ($A_F$) and a blending agent.

Content ratio of the vinylidene fluoride-based resin (F) in a surface layer is preferably 62% by mass or more from the viewpoint of chemical resistance, or 78% by mass or less from the viewpoint of transparency. It is more preferably 65% by mass or more from the viewpoint of chemical resistance, or 75% by mass or less from the viewpoint of transparency.

Incidentally, the surface layer may consist only of the vinylidene fluoride-based resin (F). Furthermore, the surface layer may consist of a polymer blend of the vinylidene fluoride-based resin (F) and the acrylic resin ($A_F$), and as described above, the blending agent described below may be added to the polymer blend. Each of the vinylidene fluoride-based resin (F) and the acrylic resin ($A_F$) may be used either singly, or in combination of two or more types. Incidentally, the "polymer blend" means a mixture of resins of plural types.

The surface layer preferably includes the vinylidene fluoride-based resin (F) and the acrylic resin ($A_F$), and a preferred mode of the content ratio of those resins is as described below. Namely, content ratio of the resin (F) in total 100% by mass of the vinylidene fluoride-based resin (F) and the acrylic resin ($A_F$) is preferably 62% by mass or more, and content ratio of the resin ($A_F$) is preferably 38% by mass or less. By including the resin (F) and the resin ($A_F$) in a surface layer, the transparency of a surface layer can be easily improved, and by having the blending ratio of those resins within the above range, the transparency of a surface layer can be easily improved while the chemical resistance of a surface layer is easily maintained.

Furthermore, in the surface layer, content ratio of the resin (F) in total 100% by mass of the vinylidene fluoride-based resin (F) and the acrylic resin ($A_F$) is preferably 62% by mass or more and 78% by mass or less, and content ratio of the resin ($A_F$) is preferably 22% by mass or more and 38% by mass or less. By having the blending ratio of those resins within the above range, both the chemical resistance and transparency of a surface layer can be obtained at higher level.

Incidentally, total content ratio of the resin (F) and the resin ($A_F$) in a surface layer is preferably 90% by mass or more and 100% by mass or less. Furthermore, in a case in which a blending agent is added to a surface layer, content ratio of the blending agent in the surface layer is preferably 10% by mass or less.

Content ratio of the resin (F) and the resin ($A_F$) and content ratio of a blending agent in a surface layer can be measured by gas chromatography mass analysis.

[Vinylidene fluoride-based resin (F)]

According to the invention, it is sufficient that the vinylidene fluoride-based resin (F) is a resin which includes a vinylidene fluoride unit. For examples, a homopolymer consisting only of a vinylidene fluoride unit or a copolymer including a vinylidene fluoride unit may be used. Mass average molecular weight (Mw) of the resin (F) is preferably 100,000 or more from the viewpoint of chemical resistance. From the viewpoint of film forming property of the film (F), it is preferably 300,000 or less.

When the resin (F) is a copolymer, content ratio of the vinylidene fluoride unit in 100% by mass of the copolymer is preferably 85% by mass or more from the viewpoint of compatibility between the resin (F) and the resin ($A_F$). The copolymerizable component to be copolymerized with the vinylidene fluoride can be suitably selected from the materials that are well known in the field of a resin film. For example, hexafluoropropylene and tetrafluoroethylene can be used. The copolymerizable component may be used either singly or in combination of two or more types.

However, from the viewpoint of obtaining the film (F) having excellent transparency and heat resistance, the resin (F) is preferably polyvinylidene fluoride, which is a homopolymer.

Furthermore, it is preferable for the resin (F) to have high crystal melting point. Specifically, the crystal melting point of the resin (F) is preferably 150°C or higher, and more preferably 160°C or higher from the viewpoint of the heat resistance of the film (F). Furthermore, from the viewpoint of the heat resistance, the upper limit of the crystal melting point is preferably 175°C or lower, which is the same as the crystal melting point of polyvinylidene fluoride. Incidentally, the "crystal melting point" means melting peak temperature which is measured based on the method described in JIS K7121, 3. (2).

The resin (F) may be used either singly or in combination of two or more types. Examples of the resin (F) include commercially available products described below. Trade name: Kynar720 (content ratio of vinylidene fluoride; 100% by mass, crystal melting point of 169°C) and trade name: Kynar710 (content ratio of vinylidene fluoride; 100% by mass, crystal melting point of 169°C) manufactured by ARKEMA, trade name: KFT#850 (content ratio of vinylidene fluoride; 100% by mass, crystal melting point of 173°C) manufactured by KUREHA CORPORATION, and trade name: Solef1006 (content ratio of vinylidene fluoride; 100% by mass, crystal melting point of 174°C) and Solef1008 (content ratio of vinylidene fluoride; 100% by mass, crystal melting point of 174°C) manufactured by Solvay Solexis Inc.

With regard to the bonding mode of a monomer unit in the vinylidene fluoride-based resin (F), there are 3 kinds of a bonding mode including head-to-head bond, tail-to-tail bond, and head-to-tail bond. Head-to-head bond and tail-to-tail bond are referred to as a "heterogeneous bond". From the viewpoint of enhancing the chemical resistance of the film (F), "ratio of the heterogeneous bond" in the resin (F) is preferably 10% or less. From the viewpoint of lowering the ratio of heterogeneous bond, the resin (F) is preferably a resin which is prepared by suspension polymerization. The above explanations regarding the heterogeneous bond are also suitably applied to a copolymer including a vinylidene fluoride unit as well as a homopolymer consisting only of a vinylidene fluoride unit.

It is possible that the "ratio of the heterogeneous bond" is obtained from a diffraction peak of 19F-NMR spectrum of the resin (F). Specifically, 40 mg of the resin (F) is dissolved in 0.8 ml of deuterated dimethyl formamide (D7-DMF), and 19F-NMR is measured at room temperature. The obtained 19F-NMR spectrum has 5 major peaks at positions of -91.5 ppm, -92.0 ppm, -94.7 ppm, -113.5 ppm, and -115.9 ppm. Among those peaks, the peak of -113.5 ppm and -115.9 ppm are identified as the peak derived from a heterogeneous bond. Thus, when the total area of the each of those 5 peaks is ST, area at -113.5 ppm is S1, and area at -115.9 ppm is S2, the ratio of a heterogeneous bond can be calculated based on the following equation.

$$\text{Ratio of heterogeneous bond} = \{(S1 + S2)/ST\} \times 100 \ (\%).$$

[Acrylic resin ($A_F$)]

In the invention, glass transition temperature (hereinbelow, it may be also referred to as "Tg") of the acrylic resin ($A_F$) is preferably 95°C or higher from the viewpoint of the surface hardness of the film (F). From the viewpoint of the molding property of the film (F), it is preferably 120°C or lower. In the invention, glass transition temperature of a resin can be measured by using a DSC (differential scanning calorimeter). The "glass transition temperature" is a temperature which is measured as "extrapolated glass transition initiation temperature" when temperature increase is carried out at temperature increasing speed condition of 10°C/minute based on the method described in JIS K7121, 3. (2).

Mass average molecular weight of the acrylic resin ($A_F$) is preferably 30,000 or more from the viewpoint of the mechanical property of the film (F). From the viewpoint of the molding property of the film (F), it is preferably 200,000 or less.

Incidentally, the acrylic resin ($A_F$) is a polymer consisting of one or both monomer units of acrylic acid ester and methacrylic acid ester. Furthermore, it may also include a monomer unit which is copolymerizable with those esters (e.g., acrylic acid unit, methacrylic acid unit, and styrene unit).

Among them, from the viewpoint of obtaining the film (F) with high surface hardness, as a monomer to be a raw material of the resin ($A_F$), it is preferable to use an alkyl methacrylic acid ester of which homopolymer has glass transition temperature is 95°C or higher. Examples of the alkyl methacrylic acid ester satisfying such requirement include methyl methacrylate, t-butyl methacrylate, t-butylcyclohexyl methacrylate, and isobornyl methacrylate. Incidentally, the alkyl group in an alkyl methacrylic acid ester may be either a branch type or a linear type. Furthermore, the carbon number of the alkyl group in an alkyl methacrylic acid ester is preferably 4 or less from the viewpoint of the heat resistance of the film (F).

As described above, the resin ($A_F$) may be a homopolymer of an alkyl methacrylic acid ester, or a copolymer of an alkyl methacrylic acid ester and a monomer which is copolymerizable with it (e.g., methacrylic acid and styrene). Content ratio of an alkyl methacrylic acid ester in the resin ($A_F$) is, from the viewpoint of the surface hardness and heat resistance of the film (F), preferably 80% by mass or more. From the viewpoint of resistance of the film (F) against thermal decomposition, it is preferably 99% by mass or less.

[Blending agent]

If necessary, the surface layer used for the laminate film of the invention may contain, within a range in which the spirit of the invention is not impaired by it, common blending agents that are used in the field of a resin film. Examples of the blending agent include heat stabilizers, anti-oxidants, lubricants, processing aids, plasticizers, anti-impact agents, foaming agents, fillers, antibacterial agents, fungicides, mold releases, antistatic agents, coloring agents, ultraviolet absorbers, flame retardants, and light stabilizers.

Examples of an anti-oxidant include a phenol-based, a sulfur-based, and a phosphorous-based antioxidant. Examples of a heat stabilizer include hindered phenol-based, sulfur-based, and hydrazine-based heat stabilizer. Examples of a plasticizer include a phthalate-based, a phosphate-based, a fatty acid ester-based, an aliphatic dibasic acid ester-based, an oxybenzoate-based, an epoxy-based, and a polyester-based plasticizers, although they may vary depending on the type of a resin for constituting fluoride-based resin (F). Examples of a lubricant include a fatty acid ester-based, a fatty acid-based, a metallic soap-based, a fatty acid amide-based, a higher alcohol-based, and a paraffin-based lubricant. Examples of an antistatic agent include a cationic-based, an anionic-based, a nonionic-based, and a zwitterionic-based antistatic agent. Examples of a flame retardant include a bromide-based, a phosphorous-based, a chloride-based, a nitrogen-based, an aluminum-based, an antimony-based, a magnesium-based, a boron-based, and a zirconium-based flame retardant. Examples of a filler include calcium carbonate, barium sulfate, talc, agalmatolite and kaolin.

Incidentally, a matting agent as a blending agent may be included to the extent such that the transparency of the film (F) is not impaired. As a matting agent, an organic and an inorganic matting agent can be used. These blending agents may be used either singly or in combination of two or more types.

In the laminate film of the invention, it is preferable that a hindered amine-based light stabilizer is not substantially contained in the surface layer. However, within a range in which the vinylidene fluoride-based resin (F) does not show an occurrence of yellowing that is caused by long term heating, a hindered amine-based light stabilizer may be contained in the surface layer. The content ratio of the hindered amine-based light stabilizer in a surface layer is, relative to total content of 100 parts by mass of the vinylidene fluoride-based resin (F) and the acrylic resin ($A_F$), preferably 0.1 part by mass or less, and more preferably 0.01 part by mass or less from the viewpoint of suppressing yellowing of a laminate film after long term heating.

The polymerization method for obtaining the vinylidene fluoride-based resin (F) and the acrylic resin ($A_F$) is not particularly limited, and a known method such as emulsion polymerization or suspension polymerization can be used. However, for the resin (F), it is preferable to use suspension polymerization from the viewpoint of lowering the ratio of a heterogeneous bond as described above.

<Layer of the acrylic resin composition (Y)>

The laminate film of the invention has a layer of the acrylic resin composition (Y), and the layer (Y) is a solidified product of the acrylic resin composition (Y). The acrylic resin composition (Y) is a resin composition which includes a hindered amine-based light stabilizer (HALS) with molecular weight of 1400 or more and a (co)polymer having at least one of an acrylic acid ester unit and a methacrylic acid ester unit. Incidentally, from the viewpoint of the molding property of the film (Y), the acrylic resin composition (Y) is preferably a composition which includes a hindered amine-based light stabilizer (HALS) with molecular weight of 1400 or more, a rubber-containing polymer ($G_Y$) (hereinbelow, it may be simply referred to as "polymer ($G_Y$))" described below, and a thermoplastic polymer ($B_Y$) (hereinbelow, it may be simply referred to as "polymer ($B_Y$))" described below. Incidentally, both the rubber-containing polymer ($G_Y$) and the thermoplastic polymer ($B_Y$) are a (co)polymer which has at least one of an acrylic acid ester unit and a methacrylic acid ester unit. Furthermore, it is also possible that the acrylic resin composition (Y) contains a blending agent described below, together with the above specific hindered amine-based light stabilizer, the polymer ($G_Y$), and the polymer ($B_Y$).

Content ratio of the hindered amine-based light stabilizer with molecular weight of 1400 or more in the acrylic resin composition (Y) is, relative to 100 parts by mass of the resin component in the acrylic resin composition (Y) (e.g., the polymer ($G_Y$) and the polymer ($B_Y$)), preferably 0.1 part by mass or more from the viewpoint of weather resistance of the film (Y) and 5 parts by mass or less from the viewpoint of the resistance to bleed out of the light stabilizer. More preferably, it is 0.2 part by mass or more from the viewpoint of weather resistance of the film (Y) and 3 parts by mass or less from the viewpoint of the resistance to bleed out of the light stabilizer.

From the viewpoint of having the weather resistance, a hindered amine-based light stabilizer with low molecular weight may be co-present in the acrylic resin composition (Y). Content ratio of the hindered amine-based light stabilizer with molecular weight of less than 1400 in the acrylic resin composition (Y) is, relative to 100 parts by mass of the resin component in the acrylic resin composition (Y) (e.g., the polymer ($G_Y$) and the polymer ($B_Y$)), preferably 1 part by mass or more, more preferably 0.1 part by mass or less, and even more preferably 0.01 part by mass or less from the viewpoint of suppressing yellowing of the laminate film after long term heating.

In a case in which the acrylic resin composition (Y) includes the polymer ($G_Y$) and the polymer ($B_Y$), content ratio of the polymer ($G_Y$) in total 100% by mass of both polymers is preferably 1% by mass or more and 99% by mass or less, and content ratio of the polymer ($B_Y$) is preferably 1% by mass or more and 99% by mass or less from the viewpoint of the molding property of the film (Y). Furthermore, from the viewpoint of the resistance of the film (Y) to whitening caused by molding, content ratio of the polymer ($G_Y$) in total 100% by mass of both polymers is more preferably 50% by mass or more, and even more preferably 70% by or more. From the same point of view, content ratio of the polymer ($B_Y$) in total 100% by mass of both polymers is more preferably 50% by mass or less, and even more preferably 30% by mass or less.

Gel content ratio of the acrylic resin composition (Y) is, from the viewpoint of the resistance to whitening caused by molding and film forming property of the film (Y), preferably 10% by mass or more and 80% by mass or less. The gel content ratio is more preferably 20% by mass or more, and even more preferably 40% by mass or more. Furthermore, the gel content ratio is more preferably 75% by mass or less, and even more preferably 70% by mass or less.

In the invention, the "gel content ratio" means a value which is measured by the following methods (1) to (3).

(1) A sample with predetermined mass of w1 (g) is subjected to an extract treatment for 6 hours under reflux with acetone.

(2) The obtained treatment solution is fractionated by centrifugal separation (14000 rpm, for 30 minutes), the solution is removed by decantation, and acetone insolubles are recovered.

(3) The recovered acetone insolubles are dried (50°C, for 24 hours), and after measuring the weight w2 (g) of a dried product thereof, the gel content ratio is measured based on the following equation.

$$\text{Gel content ratio (\% by mass)} = \text{w2/w1} \times 100.$$

[Hindered amine-based light stabilizer with molecular weight of 1400 or more]

In the invention, the acrylic resin composition (Y) contains a hindered amine-based light stabilizer with molecular weight of 1400 or more. The hindered amine-based light stabilizer means a radical supplementing agent which consists of a derivative of 2,2,6,6-tetramethylpiperidine, and the light stabilizer has a skeleton of 2,2,6,6-tetramethylpiperidine. As the molecular weight of the hindered amine-based light stabilizer is 1400 or more, yellowing of the laminate film is suppressed after long term heating. Furthermore, the molecular weight of this hindered amine-based light stabilizer is preferably 2000 or more, and even more preferably 2400 or more from the viewpoint of suppressing the yellowing of the laminate film after long term heating.

Incidentally, the molecular weight of this hindered amine-based light stabilizer can be measured by gel permeation chromatography (GPC). Herein, the molecular weight means mass average molecular weight that is calculated based on polystyrene conversion.

Furthermore, 10% mass decrease temperature of the hindered amine-based light stabilizer based on thermogravimetric analysis is preferably 380°C or higher, and more preferably 400°C or higher from the viewpoint of suppressing the yellowing of the laminate film after long term heating. The 10% mass decrease temperature of the hindered amine-based light stabilizer based on thermogravimetric analysis can be measured by increasing the temperature from room temperature (25°C) to 400°C at temperature increase rate of 10°C/minute under nitrogen atmosphere using a thermogravimetric analyzer (TGA).

It is preferable for the hindered amine-based light stabilizer to have, in the molecular structure, a piperidine skeleton and an amino group other than the piperidine skeleton. Accordingly, the yellowing of the laminate film after long term heating can be easily suppressed. Furthermore, from the viewpoint of improving the quality of a laminate film, the amino group is preferably an amino group derived from tertiary amine.

Furthermore, the hindered amine-based light stabilizer may be a stabilizer which has a reactive group in the molecular structure. Examples of the reactive group include a (meth)acrylic group, an epoxy group, a hydroxyl group, and a carboxy group. Furthermore, the hindered amine-based light stabilizer is preferably a copolymer of a reactive hindered amine-based light stabilizer. Examples of the copolymer include a copolymer with methyl methacrylate.

Specific examples of the hindered amine-based light stabilizer include the following commercially available products. Trade name: CHIMASSORB 2020 FDL (molecular weight of 2600 to 3400, 10% mass decrease temperature 400°C or higher), CHIMASSORB 944 FDL (molecular weight of 2000 to 3100, 10% mass decrease temperature 400°C or higher), UVINULI 5050 H (molecular weight of 3000 to 4000, 10% mass decrease temperature 394°C), FLAMESTAB NOR 116 FF (molecular weight of 2261, 10% mass decrease temperature 289°C), and TINUVIN NOR 371 FF (molecular weight of 2800 to 4000, 10% mass decrease temperature 309°C) all manufactured by BASF Japan; and trade name: and CYASORB UV-3346 (molecular weight of 1600 $\pm$ 10%, 10% mass decrease temperature 400°C or higher) and CYASORB UV-3529 (molecular weight of 1700 $\pm$ 10%, 10% mass decrease temperature 400°C or higher) all manufactured by SUNCHEMICAL CO., LTD.

Specific examples of the hindered amine-based light stabilizer which has a reactive group in the molecular structure include the following commercially available products. Trade name: ADEKASTAB LA-82 manufactured by ADEKA CORPORATION, and TINUVIN 152 manufactured by BASF Japan.

[Rubber-containing polymer (GY)]

In the invention, the rubber-containing polymer ($G_Y$) which can constitute part of the acrylic resin composition (Y) means a polymer including a three dimensional fishnet structure which is obtained by polymerizing a monofunctional monomer and a polyfunctional monomer.

The gel content ratio of the polymer ($G_Y$) is, from the viewpoint of the resistance of the film (Y) to whitening caused by molding, preferably 50% by mass or more, and more preferably 60% by mass or more. From the viewpoint of the resistance of the film (Y) to whitening caused by molding, higher gel content ratio is more advantageous. However, from the viewpoint of the molding property of the film (Y), presence of a free polymer in a certain amount or more required, and thus the gel content ratio of the polymer ($G_Y$) is preferably 80% by mass or less.

Mass average particle diameter of the polymer ($G_Y$) is preferably 0.03 $\mu$m or more from the viewpoint of the mechanical property of the film (Y). The mass average particle diameter of the polymer is preferably 0.3 $\mu$m or less, more preferably 0.15 $\mu$m or less, and even more preferably 0.13 $\mu$m or less from the viewpoint of maintaining the resistance to whitening caused by molding and transparency of the film (Y), and transparency during heating for insert molding or in-mold molding. Furthermore, the mass average particle diameter of the polymer is more preferably 0.07 $\mu$m or more, and even more preferably 0.09 $\mu$m or more from the viewpoint of the mechanical property of the film (Y). The "mass average particle diameter" can be measured by dynamic light scattering method which uses a light scattering spectrophotometer DLS-700 (trade name) manufactured by Otsuka Electronics Co., Ltd.

From the viewpoint of the resistance of the film (Y) to whitening caused by molding, the polymer ($G_Y$) is preferably a rubber-containing polymer which is obtained by graft copolymerization of the following monomer mixture (g) in the presence of the polymer (P1) which is obtained by polymerizing the following monomer mixture (c). Incidentally, a rubber-containing polymer which is obtained by graft copolymerization of the following monomer mixture (g) in the presence of the polymer (P2) which is obtained by polymerizing the following monomer mixture (c) followed by additional polymerization of the following monomer mixture (i) is similarly preferable.

The monomer mixture (c) is a mixture which includes, with the following blending, the following monomer (c1) and polyfunctional monomer (c4), and if necessary, the monomer (c2) and the monomer (c3).

(c1) alkyl acrylic acid ester: 50% by mass or more and 99.9% by mass or less,
(c2) alkyl methacrylic acid ester: 0% by mass or more and 49.9% by mass or less,
(c3) other monomer having 1 polymerizable double bond: 0% by mass or more and 20% by mass or less, and,
(c4) polyfunctional monomer having 2 or more polymerizable double bonds: 0.1% by mass or more and 10% by mass or less.

Meanwhile, the glass transition temperature of the polymer (P1) obtained from the above monomer mixture (c) is preferably lower than 25°C.

The monomer mixture (i) is a mixture which includes, with the following blending, the following monomer (i1), the monomer (i2), and polyfunctional monomer (i4), and if necessary, the monomer (i3).

(i1) alkyl acrylic acid ester: 9.9% by mass or more and 90% by mass or less,
(i2) alkyl methacrylic acid ester: 9.9% by mass or more and 90% by mass or less,
(i3) other monomer having 1 polymerizable double bond: 0% by mass or more and 20% by mass or less, and,

(i4) polyfunctional monomer having 2 or more polymerizable double bonds: 0.1% by mass or more and 10% by mass or less.

Meanwhile, the glass transition temperature of the polymer obtained from the above monomer mixture (i) is preferably 25°C or higher and 100°C or lower.

The monomer mixture (g) is a mixture which includes, with the following blending, the following monomer (g2), and if necessary, the monomer (g1) and the monomer (g3).

(g1) alkyl acrylic acid ester: 0% by mass or more and 20% by mass or less,
(g2) alkyl methacrylic acid ester: 51% by mass or more and 100% by mass or less, and
(g3) other monomer having 1 polymerizable double bond: 0% by mass or more and 49% by mass or less.

[Monomer mixture (c)]

The alkyl group in the monomer (c1) may be either a linear type or a branched type. Furthermore, the carbon number of this alkyl group is preferably 1 or more and 8 or less, and more preferably 4 or less from the viewpoint of the heat resistance of the polymer ($G_Y$). Specific examples of the monomer (c1) include methyl acrylate, ethyl acrylate, propyl acrylate, n-butyl acrylate, 2-ethylhexyl acrylate, and n-octyl acrylate. They may be used either singly or in combination of 2 or more types. Among them, from the viewpoint of the resistance to whitening caused by molding and impact resistance of the polymer ($G_Y$), n-butyl acrylate is preferable.

The alkyl group in the monomer (c2) that is used as an optional component may be either a linear type or a branched type. Furthermore, the carbon number of this alkyl group is preferably 4 or less from the viewpoint of the heat resistance of the polymer ($G_Y$). Specific examples of the monomer (c2) include methyl methacrylate, ethyl methacrylate, propyl methacrylate, and n-butyl methacrylate. They may be used either singly or in combination of 2 or more types. Among them, from the viewpoint of the surface hardness and heat resistance of the film (Y), methyl methacrylate is preferable.

The monomer (c3) that is used as an optional component is a monomer having only one polymerizable double bond other than the monomer (c1) and the monomer (c2). Specific examples of the monomer (c3) include the followings. A (meth)acrylic monomer such as lower alkoxyacrylate, cyanoethyl acrylate, acrylamide, acrylic acid, or methacrylic acid; styrene, alkyl substituted styrene; acrylonitrile, methacrylonitrile; unsaturated dicarboxylic acid anhydride such as maleic anhydride or itaconic anhydride; N-phenyl maleimide and N-cyclohexyl maleimide. They may be used either singly or in combination of 2 or more types.

Examples of the polyfunctional monomer (c4) include a polyfunctional monomer (c41) which has 2 or more "double bond with equivalent polymerization reactivity", and a polyfunctional monomer (c42) which has 2 or more "double bond with different polymerization reactivity".

As for the former polyfunctional monomer (c41), alkylene glycol dimethacrylate such as ethylene glycol dimethacrylate, 1,3-butylene glycol dimethacrylate, 1,4-butylene glycol dimethacrylate, or propylene glycol dimethacrylate is preferable. It is also possible to use polyvinylbenzene such as divinylbenzene or trivinylbenzene. Other than those, triallyl cyanurate, triallyl isocyanurate, or the like are also effective. They may be used either singly or in combination of 2 or more types. Among them, from the viewpoint of the resistance of the film (Y) to whitening caused by molding, 1,3-butylene glycol dimethacrylate is preferable.

The latter polyfunctional monomer (c42) is a monomer which is referred to as a so-called graft crosslinking agent. Specific examples thereof include allyl ester, methallyl ester, or crotyl ester of a copolymerizable $\alpha,\beta$-unsaturated carboxylic acid or dicarboxylic acid. When those compounds are used as a graft crosslinking agent, the conjugated unsaturated bond of the ester generally reacts much faster than allyl group, methallyl group, or crotyl group to form a chemical bond. In particular, from the viewpoint of the resistance of the film (Y) to whitening caused by molding, an allyl ester of acrylic acid, methacrylic acid, maleic acid, or fumaric acid is preferable. Among them, allyl methacrylic acid ester is preferable as it exhibits an excellent effect. They may be used either singly or in combination of 2 or more types.

In the monomer mixture (c), a chain transfer agent may be contained other than each of the above monomers (c1) to (c4). Incidentally, the chain transfer agent may be suitably selected from those used for a common radical polymerization. Specific examples thereof include alkyl mercaptan with carbon number of 2 or more and 20 or less, mercapto acids, thiophenol, and carbon tetrachloride. Use amount of the chain transfer agent is, although not particularly limited, preferably 0 part by mass or more and 5 parts by mass or less relative to total 100 parts by mass of the monomer (c1) to (c4).

Content ratio of the monomer (c1) in the monomer mixture (c) is, from the viewpoint of the resistance to whitening caused by molding and impact resistance of the film (Y), 50% by mass or more. From the viewpoint of the surface hardness and heat resistance of the film (Y), it is 99.9% by mass or less. Content ratio of the monomer (c1) in the monomer mixture (c) is, from the viewpoint of the resistance of the film (Y) to whitening caused by molding, preferably 55% by mass or more, and more preferably 60% by mass or more. Furthermore, upper limit of the content ratio of the monomer (c1) is, from the viewpoint of the surface hardness and heat resistance of the film (Y), preferably 79.9% by mass or less, and more preferably 69.9% by mass or less.

Content ratio of the monomer (c2) in the monomer mixture (c) is 0% by mass or more and 49.9% by mass or less. By containing the monomer (c2) at 49.9% by mass or less, the resistance of the film (Y) to whitening caused by molding can be easily enhanced. Furthermore, from the viewpoint of the surface hardness and heat resistance of the film (Y), content ratio of the monomer (c2) in the monomer mixture (c) is preferably 20% by mass or more, and more preferably 30% by mass or more. Furthermore, content ratio of the monomer (c2) is, from the viewpoint of the resistance of the film (Y) to whitening caused by molding, preferably 44.9% by mass or less, and more preferably 39.9% by mass or less.

Content ratio of the monomer (c3) in the monomer mixture (c) is 0% by mass or more and 20% by mass or less. By containing the monomer (c3) at 20% by mass or less, a difference in refractive index between the rubber-containing polymer $(G_Y)$ and the thermoplastic polymer $(B_Y)$ is reduced so that the transparency of the film (Y) can be easily enhanced. Furthermore, from the viewpoint of the transparency of the film (Y), content ratio of the monomer (c3) in the monomer mixture (c) is preferably 0.1% by mass or more. Furthermore, from the viewpoint of the resistance to whitening caused by molding and impact resistance of the film (Y), it is preferably 15% by mass or less.

Content ratio of the polyfunctional monomer (c4) in the monomer mixture (c) is 0.1% by mass or more and 10% by mass or less. By containing the polyfunctional monomer (c4) at 10% by mass or less, the resistance of the film (Y) to whitening caused by molding can be easily enhanced. Furthermore, from the viewpoint of the resistance of the film (Y) to whitening caused by molding, it is preferably 1% by mass or more, and more preferably 3% by mass or more. Furthermore, from the viewpoint of providing the film (Y) with sufficient flexibility and strength, the upper limit of the polyfunctional monomer (c4) is preferably 6% by mass or less, and more preferably 5% by mass or less.

Incidentally, to have graft polymerization of the monomer mixture (g) in the presence of the polymer (P1), it is preferable that, as the polyfunctional monomer (c4), at least a graft crosslinking agent is contained in the monomer mixture (c). Content ratio of the graft crosslinking agent in the monomer mixture (c) is preferably 0.1% by mass or more. By having the content ratio of the graft crosslinking agent at 0.1% by mass or more, more favorable resistance of the film (Y) to whitening caused by molding can be obtained, and the film (Y) can be easily molded without lowering the optical properties like transparency. The content ratio is more preferably 0.5% by mass or more. Furthermore, by having the content ratio of the graft crosslinking agent at 10% by mass or less, the film (Y) can be easily provided with sufficient flexibility and strength. The content ratio is preferably 6% by mass or less, and more preferably 5% by mass or less.

Tg of the polymer (P1) obtained from the aforementioned monomer mixture (c) is preferably lower than 25°C from the viewpoint of the resistance to whitening caused by molding and impact resistance of the film (Y). Furthermore, it is more preferably 10°C or lower, and even more preferably 0°C or lower. As Tg is 10°C or lower, the film (Y) obtained by using specific hindered amine-based light stabilizer, the polymer $(G_Y)$ and the polymer $(B_Y)$ can easily exhibit excellent impact resistance. Furthermore, from the viewpoint of the surface hardness and heat resistance of the film (Y), Tg of the polymer (P1) is preferably -60°C or higher, and more preferably -50°C or higher.

Use amount of the monomer mixture (c) for preparing the polymer $(G_Y)$ is as described below. For a case in which the monomer mixture (i) is not used, the amount of the monomer mixture (c) in total 100% by mass of the monomer mixture (c) and the monomer mixture (g) is preferably 15% by mass or more and 50% by mass or less. For a case in which the monomer mixture (i) is used, the amount of the monomer mixture (c) in total 100% by mass of the monomer mixture (c), the monomer mixture (g), and the monomer mixture (i) is preferably 15% by mass or more and 50% by mass or less. In any of those cases, by having the amount of the monomer mixture (c) at 15% by mass or more, the film (Y) can be easily provided with the resistance to whitening caused by molding, and both the film forming property and toughness required for the molding method to be used (e.g., insert molding and in-mold molding) can be obtained easily. Furthermore, by having the amount of the monomer mixture (c) at 50% by mass or less, a laminate film having both the surface hardness and heat resistance required for a laminate of a member for vehicles is easily obtained. The amount of the monomer mixture (c) is more preferably 25% by mass or more and 35% by mass or less.

At the time of polymerizing the monomer mixture (c), the monomer mixture (c) may be added all at once to a polymerization vessel, or it may be added in 2 or more divided steps. From the viewpoint of the resistance to whitening caused by molding and impact resistance of the film (Y), it is preferably added in 2 or more divided steps and polymerized. In case of adding it in 2 or more divided steps followed by polymerization, the constitutional ratio of each monomer in the monomer mixture (c) may be the same or different from each other in each polymerization step. However, from the viewpoint of the resistance to whitening caused by molding and impact resistance of the film (Y), the constitutional ratio of each monomer is preferably different from each other in each polymerization step.

For a case in which the monomer mixture (c) is added in 2 divided steps and then polymerized, from the viewpoint of the resistance to whitening caused by molding, impact resistance, heat resistance, and surface hardness of the film (Y), glass transition temperature Tg1 of a polymer which is obtained only from the monomer mixture (c-1) used at the first step is preferably lower than glass transition temperature Tg2 of a polymer which is obtained only from the monomer mixture (c-2) used at the second step. Specifically, from the viewpoint of the resistance to whitening caused by molding and impact resistance of the film (Y), Tg is preferably lower than -30°C. From the viewpoint of the surface hardness and heat resistance of the film (Y), it is preferably -60°C or higher. Furthermore, from the viewpoint of the surface hardness and heat resistance of the film (Y), Tg2 is preferably -15°C or higher and 10°C or lower.

For a case in which the monomer mixture (c) is added in 2 divided steps and then polymerized, the resistance to whitening caused by molding and impact resistance of the film (Y), the amount of the monomer mixture (c-1) in 100% by mass of the monomer mixture (c) is preferably 1% by mass or more and 20% by mass or less, and the amount of the monomer mixture (c-2) is preferably 80% by mass or more and 99% by mass or less.

In the invention, according to polymerization of the monomer mixture (c), the polymer (P1) is obtained. According to graft polymerization of the monomer mixture (g) to the polymer (P1), the rubber-containing polymer $(G_Y)$ can be obtained. However, if necessary, it is also possible that the monomer mixture (c) is polymerized followed by polymerization of the monomer mixture (i) to obtain the polymer (P2), and according to graft polymerization of the monomer mixture (g) to the polymer (P2), the rubber-containing polymer $(G_Y)$ can be obtained.

[Monomer mixture (i)]

As for the monomer (i1), the monomer (i2), the monomer (i3), and the monomer (i4) which can constitute the monomer mixture (i), the same monomer as the monomer (c1), the monomer (c2), the monomer (c3) and the monomer (c4) described above can be used. Incidentally, the monomer used as the monomer (i1) and the monomer used as the monomer (c1) may be the same compound or a different compound. Such relationship holds true for the compounds that are used as the monomer (i2) and the monomer (c2), the compounds that are used as the monomer (i3) and the monomer (c3), and the compounds that are used as the monomer (i4) and the monomer (c4).

In the monomer mixture (i), the chain transfer agent described above can be also contained. Use amount of the chain transfer agent is, although not particularly limited, preferably 5 parts by mass or less relative to total 100 parts by mass of the monomer (i1) to (i4).

Content ratio of the monomer (i1) in the monomer mixture (i) is, from the viewpoint of the resistance to whitening caused by molding and impact resistance of the film (Y), 9.9% by mass or more. From the viewpoint of the surface hardness and heat resistance of the film (Y), it is 90% by mass or less. From the viewpoint of the resistance of the film (Y) to whitening caused by molding, the content ratio is preferably 19.9% by mass or more, and more preferably 29.9% by mass or more. Furthermore, upper limit of the content ratio is, from the viewpoint of the surface hardness and heat resistance of the film (Y), preferably 60% by mass or less, and more preferably 50% by mass or less.

Content ratio of the monomer (i2) in the monomer mixture (i) is, from the viewpoint of the surface hardness and heat resistance of the film (Y), 9.9% by mass or more. From the viewpoint of the resistance to whitening caused by molding and impact resistance of the film (Y), it is 90% by mass or less. From the viewpoint of the surface hardness and heat resistance of the film (Y), the content ratio is preferably 39.9% by mass or more, and more preferably 49.9% by mass or more. Furthermore, upper limit of the content ratio is, from the viewpoint of the resistance to whitening caused by molding and impact resistance of the film (Y), preferably 80% by mass or less, and more preferably 70% by mass or less.

Content ratio of the monomer (i3) in the monomer mixture (i) is 0% by mass or more and 20% by mass or less. By having the content ratio of 20% by mass or less, a difference in refractive index between the rubber-containing polymer $(G_Y)$ and the thermoplastic polymer $(B_Y)$ is reduced so that the transparency of the film (Y) can be easily enhanced. Furthermore, from the viewpoint of the transparency of the film (Y), content ratio is preferably 0.1% by mass or more. Furthermore, from the viewpoint of the resistance of the film (Y) to whitening caused by molding, it is preferably 15% by mass or less.

Content ratio of the polyfunctional monomer (i4) in the monomer mixture (i) is 0.1% by mass or more and 10% by mass or less. As the content ratio is 10% by mass or less, the resistance of the film (Y) to whitening caused by molding can be easily enhanced. Furthermore, from the viewpoint of the resistance of the film (Y) to whitening caused by molding, the content ratio is preferably 0.3% by mass or more, and more preferably 0.5% by mass or more. Furthermore, from the viewpoint of providing the film (Y) with sufficient flexibility and strength, the content ratio is preferably 6% by mass or less, and more preferably 3% by mass or less.

Incidentally, to have graft polymerization of the monomer mixture (g) in the presence of the polymer (P2) which is obtained by polymerizing the monomer mixture (c) and the monomer (i), it is preferable that, as the polyfunctional monomer (i4), at least a graft crosslinking agent is contained in the monomer mixture (i). The content ratio of the graft crosslinking agent in the monomer mixture (i) is 0.1% by mass or more. By having the content ratio of the graft crosslinking agent in the monomer mixture (i) at 0.1% by mass or more, more favorable resistance of the film (Y) to whitening caused by molding can be obtained, and the film (Y) can be easily molded without lowering the optical properties like transparency. The content ratio is more preferably 0.5% by mass or more. Furthermore, by having the content ratio of the graft crosslinking agent at 10% by mass or less, the film (Y) can be easily provided with sufficient flexibility and strength. The content ratio of the graft crosslinking agent is preferably 6% by mass or less, and more preferably 3% by mass or less.

Tg of a polymer obtained from the aforementioned monomer mixture (i) is preferably 25°C or higher 100°C or lower. As Tg is 25°C or higher, the surface hardness and heat resistance of the film (Y) can be obtained easily at the level that is required for a member of vehicles. Tg of the polymer is more preferably 40°C or higher, and even more preferably 50°C or higher. When Tg of the polymer is 100°C or lower, the film (Y) with favorable resistance to whitening caused by molding and film forming property can be easily obtained. Tg of the polymer is more preferably 80°C or lower, and even more preferably 70°C or lower.

Use amount of the monomer mixture (i) for preparing the polymer ($G_Y$) in total 100% by mass of the monomer mixture (c), the monomer mixture (g), and the monomer mixture (i) is preferably 5% by mass or more and 35% by mass or less. As the use amount of the monomer mixture (i) is within the above range, the film (Y) can be easily provided the film forming property and toughness that is considered to be necessary for insert molding and in-mold molding while the resistance to whitening caused by molding, surface hardness, and function of heat resistance are easily expressed. The use mount of the monomer mixture (i) is more preferably 7% by mass or more and 20% by mass or less.

At the time of polymerizing the monomer mixture (i), the monomer mixture (i) may be added all at once to a polymerization vessel, or it may be added in 2 or more divided steps. In case of adding it in 2 or more divided steps followed by polymerization, the constitutional ratio of each monomer may be the same or different from each other in each polymerization step.

As described above, for a case in which the monomer mixture (c) allowing obtainment of a polymer with glass transition temperature of lower than 25°C is polymerized, and subsequently the monomer mixture (i) allowing obtainment of a polymer with glass transition temperature of 25°C to 100°C is polymerized, a polymer particle with bilayer structure consisting of an inner layer polymer with low Tg and an outer layer polymer with high Tg is generated. In the invention, by carrying out graft polymerization of the monomer mixture (g) to the polymer particle with bilayer structure, the rubber-containing polymer ($G_Y$) can be obtained.

[Monomer mixture (g)]

The monomer mixture (g) is a mixture consisting of an alkyl methacrylic acid ester (g2), and if necessary, an alkyl acrylic acid ester (g1) and other monomer (g3) having 1 polymerizable double bond. As for the monomer (g1), the monomer (g2), and the monomer (gi3), the same monomer as the monomer (c1), the monomer (c2), and the monomer (c3) can be used.

Incidentally, the monomer used as the monomer (g1) and the monomer used as the monomer (c1) may be the same compound or a different compound. Such relationship holds true for the compounds that are used as the monomer (g2) and the monomer (c2), and also the compounds that are used as the monomer (g3) and the monomer (c3).

In the monomer mixture (g), the aforementioned chain transfer agent may be also contained. From the viewpoint of the film forming property of the film (Y), the use amount of the chain transfer agent is 0.01 part by mass or more and 5 parts by mass or less relative to total 100 parts by mass of the monomer (g1) to (g3). The lower limit is more preferably 0.2 part by mass or more, and even more preferably 0.4 part by mass or more.

Content ratio of the monomer (g1) in the monomer mixture (g) is 0% by mass or more and 20% by mass or less. By containing the monomer (g1) at 20% by mass or less, the resistance of the film (Y) to thermal degradation can be easily enhanced. From the viewpoint of the surface hardness and heat resistance of the film (Y), the content ratio of the monomer (g1) is preferably 10% by mass or less, and more preferably 7% by mass or less. Furthermore, the lower limit is, from the viewpoint of the resistance of the film (Y) to thermal degradation, preferably 1% by mass or more.

Content ratio of the monomer (g2) in the monomer mixture (g) is 51% by mass or more and 100% by mass or less. By containing the monomer (g2) at 51% by mass or more, the surface hardness and heat resistance of the film (Y) can be easily enhanced. From the viewpoint of the resistance of the film (Y) to thermal degradation, the content ratio of the monomer (g2) is preferably 99% by mass or less. Furthermore, the lower limit is, from the viewpoint of the surface hardness and heat resistance of the film (Y), preferably 90% by mass or more, and more preferably 93% by mass or more.

Content ratio of the monomer (g3) in the monomer mixture (g) is 0% by mass or more and 49% by mass or less. By having the content ratio of the monomer (g3) at 49% by mass or less, a difference in refractive index between the rubber-containing polymer ($G_Y$) and the thermoplastic polymer ($B_Y$) is reduced so that the transparency of the film (Y) can be easily enhanced. Furthermore, from the viewpoint of the transparency of the film (Y), content ratio of the monomer (g3) is preferably 0.1% by mass or more. Furthermore, from the viewpoint of the surface hardness and heat resistance of the film (Y), it is preferably 20% by mass or less.

Use amount of the monomer mixture (g) for preparing the polymer ($G_Y$) is preferably 15% by mass or more and 80% by mass or less in total 100% by mass of the monomer. As the use amount of the monomer mixture (g) is 15% by mass or more, the surface hardness and heat resistance of the film (Y) are easily improved. The use amount is more preferably 45% by mass or more. As the use amount is 80% by mass or less, the film (Y) with resistance to whitening caused by molding can be easily obtained, and also the film (Y) can be easily provided with the toughness that is considered to be necessary for insert molding and in-mold molding. The use amount is more preferably 70% by mass or less. Incidentally, the "total of the monomer" means either the total of the monomer mixture (c) and the monomer mixture (g) or the total of the monomer mixture (i) and the monomer mixture (g).

At the time of polymerizing the monomer mixture (g), the monomer mixture (g) may be added all at once to a polymerization vessel, or it may be added in 2 or more divided steps. In case of adding it in 2 or more divided steps followed by polymerization, the constitutional ratio of each monomer in the monomer mixture (g) may be the same or different from each other in each polymerization step.

[Method for polymerizing the polymer $(G_Y)$]

The method for polymerizing the rubber-containing polymer $(G_Y)$ is, although not particularly limited, most preferably a stepwise multi-stage polymerization based on emulsion polymerization. For example, it is possible that the monomer mixture (c) is subjected to emulsion polymerization in the presence of water, a surface active agent, and a polymerization initiator, and polymerization of the monomer mixture (g) is carried out after supplying the monomer mixture (g). It is also possible to adopt an emulsion suspension polymerization in which polymerization of the monomer mixture (c) and the monomer mixture (i) is carried out by emulsion polymerization and polymerization of the monomer mixture (g) is carried out by suspension polymerization.

For a case in which the rubber-containing polymer $(G_Y)$ is prepared by emulsion polymerization, a method in which an emulsion is prepared by mixing in advance the monomer mixture (c), water, and a water surface active agent, the emulsion is supplied to a reaction vessel for polymerization, and each of the monomer mixture (i) and the monomer mixture (g) is supplied in the order to a reaction vessel for polymerization is preferable. Incidentally, in the invention, supply of the monomer mixture (i) can be omitted.

By supplying the emulsion which has been prepared in advance to a reaction vessel followed by polymerization, it is possible to obtain easily the rubber-containing polymer $(G_Y)$ which has 0 or more and 50 or less particles with diameter of 55 $\mu$m or more per 100 g of the polymer, in which the particle is present in a dispersion obtained by dispersing the polymer in a dispersion medium (e.g., acetone). The film (Y) in which such rubber-containing polymer $(G_Y)$ is used as a raw material has a characteristic that the number of fish eyes in the film is low. Furthermore, even when gravure printing of pale color with wood pattern is carried out with low printing pressure which easily yields a missing print or gravure printing of solid printing with metallic or ebony black tone is carried out, there is only a few missing print and a high-level property is obtained, and therefore desirable. Incidentally, the diameter and number of the particles present in a dispersion can be measured by a laser diffraction type particle size distribution analyzer.

As for the surface active agent which is used for preparing an emulsion, an anionic, a cationic, and a non-ionic surface active agent can be used. From the viewpoint of resistance of the film (Y) to whitening caused by hot water, an anionic surface active agent is preferable.

Examples of the anionic surface active agent include carboxylates such as rosin soap, potassium oleate, sodium stearate, sodium myristate and sodium N-lauroylsarcosine and dipotassium alkenyl succinate; sulfates such as sodium lauryl sulfate; sulfonates such as sodium dioctyl sulfosuccinate, sodium dodecylbenzene sulfonate and sodium alkyl diphenyl ether disulfonate; phosphate salts such as sodium polyoxyethylene alkyl phenyl ether phosphate; and phosphate salts such as sodium polyoxyethylene alkyl ether phosphate.

Among them, from the viewpoint of the resistance of the film (Y) to whitening caused by hot water, phosphate salts such as sodium polyoxyethylene alkyl ether phosphate are preferable. Actual examples of the surface active agent include the following commercially available products. NC-718 manufactured by Sanyo Chemical Industries, Ltd.; PHOSPHANOL LS-529, PHOSPHANOL RS-610NA, PHOSPHANOL RS-620NA, PHOSPHANOL RS-630NA, PHOSPHANOL RS-640NA, PHOSPHANOL RS-650NA, PHOSPHANOL RS-660NA manufactured by Toho Chemical Industry Co., Ltd.; and LATEMUL P-0404, LATEMUL P-0405, LATEMUL P-0406, LATEMUL P-0407 manufactured by Kao Corporation, which are all trade names.

Examples of the method for preparing an emulsion include the following methods (1) to (3).

(1) A method in which a monomer mixture is added to water, and a surface active agent is added thereto.
(2) A method in which a surface active agent is added to water, and a monomer mixture is added thereto.
(3) A method in which a surface active agent is added to a monomer mixture, and water is added thereto.

Among them, from the viewpoint of reducing fish eyes, the above method (1) and the method (2) are preferable.

Examples of an apparatus for preparing an emulsion include various kinds of forced emulsifying apparatuses such as a homogenizer and a homomixer and a film emulsifying apparatus.

The emulsion may be any one of a W/O type in which water droplets are dispersed in a monomer, and of an O/W type in which oil droplets of a monomer are dispersed in water. However, from the viewpoint of reducing fish eyes in the film, it is preferably an O/W type emulsion in which oil droplets of a monomer are dispersed in water and a diameter of dispersion phase (oil droplets) is 100 $\mu$m or less. Incidentally, the diameter of the dispersion phase in an emulsion can be measured by a laser diffraction type particle size distribution analyzer.

Examples of the polymerization initiators which may be used for polymerizing the monomer mixture (c), the monomer mixture (g), and if necessary, the monomer mixture (i) include peroxides, azo initiators and redox initiators as a combination of an oxidizing and a reducing agents. It is preferably a redox initiator from the viewpoint of the efficiency for generating radical. It is particularly preferably a sulfoxylate initiator as a combination of ferrous sulfate, disodium ethylenediamine tetraacetate, Rongalit, and hydroperoxide. Use amount of the polymerization initiator can be suitably set depending on polymerization conditions or the like. Furthermore, the polymerization initiator may be added to any one of an aqueous phase and a monomer phase (i.e., oil phase) in an emulsion, or to both of them.

As for the method for polymerizing the rubber-containing polymer $(G_Y)$, the following method is particularly preferable from the viewpoint of polymerization stability. First, by adding ferrous sulfate, disodium ethylenediamine tetraacetate, Rongalit, and water to a reaction vessel to prepare an aqueous solution, the resulting aqueous solution is heated to a polymerization temperature. Incidentally, by mixing the monomer mixture (c), a polymerization initiator like peroxides, water, and a surface active agent, an emulsion is prepared. Subsequently, by supplying the emulsion to the reaction vessel after temperature increase above, the monomers are polymerized. Subsequently, by supplying the monomer mixture (i) with a polymerization initiator like peroxides to a reaction vessel, polymerization is carried out. Next, by supplying the monomer mixture (g) with a polymerization initiator like peroxides to a reaction vessel, polymerization is carried out. Incidentally, in the invention, supply and polymerization of the monomer mixture (i) are not essential and can be omitted.

The polymerization temperature may vary, depending on the type and the amount of a polymerization initiator, but is preferably 40°C or higher, more preferably 60°C or higher from the viewpoint of the polymerization stability. Furthermore, the polymerization temperature is preferably 120°C or lower, and more preferably 95°C or lower.

A polymer latex containing the rubber-containing polymer $(G_Y)$ which has been obtained by the above method is preferably treated with a filtering device. According to this filtering treatment, scale formed during polymerization process, impurities present in raw materials, and foreign materials incorporated from an outside during polymerization process can be removed from the latex.

The rubber-containing polymer $(G_Y)$ can be obtained by recovering the rubber-containing polymer $(G_Y)$ from a latex prepared by the above method. As for the method for recovering the rubber-containing polymer $(G_Y)$ from a latex, methods like solidification based on base precipitation or acid precipitation, spray dry, and freeze dry can be mentioned. According to these methods, the rubber-containing polymer $(G_Y)$ is recovered in powder shape.

[Thermoplastic polymer $(B_Y)$]

The thermoplastic polymer $(B_Y)$ which may constitute part of the acrylic resin composition (Y) of the invention is a polymer which contains an alkyl methacrylic acid ester unit at 50% by mass or more. In this thermoplastic polymer $(B_Y)$, the rubber-containing polymer $(G_Y)$ is not included. Content ratio of an alkyl methacrylic acid ester in the polymer $(B_Y)$ is, from the viewpoint of the surface hardness and heat resistance of the film (Y), preferably 50% by mass or more and 100% by mass or less, and more preferably 80% by mass or more, 99.9% by mass or less.

Examples of the monomer as a raw material of the "alkyl methacrylic acid ester unit" constituting the polymer $(B_Y)$ include methyl methacrylate, ethyl methacrylate, propyl methacrylate, and n-butyl methacrylate. The alkyl group in an alkyl methacrylic acid ester may be either a branch type or a linear type. The carbon number of the alkyl group is preferably 4 or less from the viewpoint of the heat resistance of the film (Y). Furthermore, among them, from the heat resistance of the film (Y), methyl methacrylate is more preferable. They may be used either singly or in combination of 2 or more types.

The polymer $(B_Y)$ may also include, as an optional component, 0% by mass or more and 50% by mass or less of an "alkyl acrylic acid ester unit" and 0% by mass or more and 50% by mass or less of "other monomer unit" which is different from those monomer units.

Content ratio of the "alkyl acrylic acid ester unit" in the polymer $(B_Y)$ is preferably 0% by mass or more and 50% by mass or less from the viewpoint of providing the film (Y) with the film forming property and toughness which enables insert molding and/or in-mold molding. The content ratio is more preferably 0.1% by mass or more and 20% by mass or less.

Examples of the monomer to be a raw material of the above "alkyl acrylic acid ester unit" include methyl acrylate, ethyl acrylate, propyl acrylate, and n-butyl acrylate. The alkyl group in the alkyl acrylic acid ester may be either a branch type or a linear type, and the carbon number of the alkyl group is preferably 4 or less from the viewpoint of the heat resistance of the film (Y). Furthermore, among them, from the heat resistance of the film (Y), methyl acrylate is more preferable. They may be used either singly or in combination of 2 or more types.

Content ratio of the above "other monomer unit" in the polymer $(B_Y)$ is preferably 0% by mass or more and 50% by mass or less from the viewpoint of the molding property of the film (Y). The content ratio is more preferably 0% by mass or more and 20% by mass or less.

As for the "other monomer" to be a raw material of the above "other monomer unit", a monomer well known in the field of laminate film can be used, if necessary. Examples thereof include an aromatic vinyl monomer such as styrene; a vinyl cyanide monomer such as acrylonitrile; unsaturated dicarboxylic acid anhydride such as maleic anhydride or itaconic anhydride; N-phenyl maleimide and N-cyclohexyl maleimide. They may be used either singly or in combination of 2 or more types.

Incidentally, content ratio of each monomer unit in the polymer ($B_Y$) can be characterized by gas chromatography mass analysis.

The reduction viscosity of the polymer ($B_Y$) is preferably 0.15 L/g or less, and more preferably 0.10 L/g or less from the viewpoint of the insert molding property, in-mold molding property, and film forming property of the film (Y). Furthermore, reduction viscosity of the polymer ($B_Y$) is preferably 0.01 L/g or more, and more preferably 0.03 L/g or more from the viewpoint of the film forming property of the film (Y). The "reduction viscosity" is a viscosity which is measured at 25°C after dissolving 0.1 g of a polymer in 100 mL of chloroform.

From the above, the polymer ($B_Y$) is preferably a polymer or a copolymer having reduction viscosity of 0.15 L/g or less which is obtained by polymerization or copolymerization of 50% by mass or more and 100% by mass or less of an alkyl methacrylic acid ester in which carbon number of the alkyl group is 1 or more and 4 or less, 0% by mass or more and 50% by mass or less of an alkyl acrylic acid ester, and 0% by mass or more and 50% by mass or less of the above "other monomer".

The thermoplastic polymer ($B_Y$) may be used either singly or in combination of 2 or more types. By using in combination 2 or more types of the polymer ($B_Y$), the surface hardness and heat resistance of the film (Y) can be easily enhanced. Incidentally, from the viewpoint of the heat resistance of the film (Y), the glass transition temperature of the polymer ($B_Y$) is preferably 80°C or higher, and more preferably 90°C or higher.

Incidentally, the mass average molecular weight of the polymer ($B_Y$) is preferably 30,000 or more from the viewpoint of the mechanical property of the film (Y). From the viewpoint of the molding property of the film (Y), it is preferably 200,000 or less.

The method for producing the polymer ($B_Y$) is not particularly limited, and the polymerization can be carried out by a common method like a suspension polymerization, an emulsion polymerization, and a bulk polymerization.

[Blending agent]

As described above, the film (Y) may include various kinds of a blending agent, and in particular, it preferably contains a UV absorbing agent and a radical capturing agent like an anti-oxidant.

As for the UV absorbing agent, a known UV absorbing agent may be used for the purpose of enhancing the weather resistance of a film, and it is not particularly limited. However, from the viewpoint of the resistance to bleed out, a UV absorbing agent with molecular weight of 300 or more is preferable, and a UV absorbing agent with molecular weight of 400 or more is more preferable. In particular, a benzotriazole-based with molecular weight of 400 or more or a triazine-based with molecular weight of 400 or more can be preferably used. Specific examples of the benzotriazole-based UV absorbing agent include the followings. Trade name: TINUVIN 234 manufactured by BASF Japan, and trade name: LA-31 manufactured by ADEKA CORPORATION. Specific examples of the triazine-based UV absorbing agent include trade name: TINUVIN 1577 manufactured by BASF Japan. Content ratio of the UV absorbing agent in 100% by mass of the acrylic resin composition (Y) is preferably 0.1% by mass or more and 10% by mass or less, and more preferably 0.2% by mass or more and 5% by mass or less from the viewpoint of the resistance to bleed out.

Furthermore, to further enhance the weather resistance of the layer (Y), it is preferred that the acrylic resin composition (Y) contains, together with a hindered amine-based light stabilizer having molecular weight of 1400 or more and a UV absorbing agent, an anti-oxidant. Examples of the anti-oxidant which may be used include a phenol-based, a sulfur-based, and a phosphorus-based anti-oxidant. Content ratio of the anti-oxidant in 100% by mass of the acrylic resin composition (Y) is preferably 0.05% by mass or more and 10% by mass or less, and more preferably 0.05% by mass or more and 5% by mass or less from the viewpoint of the resistance to bleed out.

[Weather resistance of laminate film]

According to the laminate film of the invention, it is preferable that an increase amount of yellowness (ΔYI) after heating for 500 hours in an atmosphere with temperature of 100°C is 3.0 or less when compared to before heating. Furthermore, according to the laminate film of the invention, it is preferable that the light transmittance $T_{1080}$ at wavelength of 323 nm after having exposure till to have integrated light amount of 1080 MJ/m$^2$ by using an ultra accelerated weathering tester (manufactured by Iwasaki Electric Co., Ltd., product name: SUV-F1) is 20% or less.

<Method for producing laminate film>

The method for producing the laminate film of the invention is, although not particularly limited, preferably a co-extrusion method from the viewpoint of having fewer production steps. According to a co-extrusion method, a resin composition for forming a surface layer including the vinylidene fluoride-based resin (F) and the acrylic resin composition (Y) are co-extruded simultaneously to produce a laminate film in which the layer (Y) and the layer (F) are laminated. Even for a case in which a laminate film with trilayer structure having the layer (F) present on both sides of the layer (Y) is to be produced, the co-extrusion is preferable.

As a specific method for laminating plural melt resin layers, the following methods (1) to (3) can be mentioned.

(1) A feed block method or the like in which a melt resin layer is laminated before pass through a die,
(2) A multi-manifold method or the like in which a melt resin layer is laminated within a die, and
(3) A multi-slot method or the like in which a melt resin layer is laminated after pass through a die.

Incidentally, for a case in which a resin composition for forming a surface layer and the acrylic resin composition (Y) are simultaneously melt-extruded and laminated, it is preferable that the melt extrusion is carried out such that the layer (Y) is in contact with a cooling roll, from the viewpoint of providing a surface of the layer (F) with a matte property. Specifically, the laminate film of the invention can be produced by a production method including the following steps, for example.

After preparing 2 pieces of a melt extruder, the cylinder temperature and die temperature of each extruder are set at 200°C or higher and 250°C or lower. In an extruder 1 on one side, the resin composition for forming a surface layer is melt and plasticized. Simultaneously, in an extruder 2 on the other side, the acrylic resin composition (Y) is melt and plasticized. The melt resin extruded from a die at tip of both extruders is co-extruded on a cooling roll which is set at 50°C or higher and 100°C or lower.

In a case in which the aforementioned blending agent is contained in the surface layer or the layer (Y), the method for adding the blending agent is not particularly limited. For example, the blending agent may be directly added to the above extruder together with the vinylidene fluoride-based resin (F) for the layer (F) and the acrylic resin ($A_F$), or the acrylic resin composition (Y) for the layer (Y). It is also possible that the blending agent is added in advance to the vinylidene fluoride-based resin (F) for the layer (F) and the acrylic resin ($A_F$), or the acrylic resin composition (Y) for the layer (Y), and mixed in a kneader. Examples of a kneader include common single screw extruders, twin screw extruders, Banbury mixers, and roll kneaders.

<Molded laminate>

By laminating the laminate film of the invention on a surface of a base including various resin molded articles, wood products, and metal molded articles, a laminate (molded laminate) which has a layer including the vinylidene fluoride-based resin (F) on the surface can be produced. Incidentally, it is sufficient for the molded laminate of the invention that a laminate film is laminated on a base, and between a base and a laminate film, other layer (e.g., a printing layer described below) can be included. Specifically, according to the production method including the following steps, the molded laminate of the invention can be produced.

Namely, the molded laminate can be produced by a production method which includes a step for producing a preliminary molded article by vacuum molding or pressure molding a laminate film in a first die, and a step for integrating the preliminary molded article and the base by injection molding a resin that is to be a base in a second die. Incidentally, for a case in which a molded laminate having a layer including the vinylidene fluoride-based resin (F) on a surface is to be produced, the injection molding is performed such that the layer (F) is present on a surface of the molded article.

The base can be suitably selected depending on a desired molded laminate (i.e., aforementioned resin molded article, wood product, or metal molded article). For example, when a resin molded article is to be formed, a resin layer (e.g., thermoplastic resin layer) may be used as a base. Examples of the thermoplastic resin include an ABS resin (acrylonitrile styrene butadiene copolymer) and a polycarbonate resin.

Furthermore, the laminate film of the invention can be used, to provide various bases with a decorative property, after performing printing by suitable printing method, if necessary. Having a print layer between the laminate film of the invention and various bases is preferable from the viewpoint of protecting a print layer or having luxurious feeling. Furthermore, for a use in which color tone of a base is utilized, the laminate film of the invention can be directly used. In particular, for a use in which color tone of a base is utilized, the laminate film of the invention is excellent in terms of transparency, deep feeling, or luxurious feeling compared to a polyvinyl chloride film or a polyester film.

The laminate film of the invention is suitable for a molded laminate which is used as a member of vehicles, and a molded laminate which is used as a constructional material. Specific examples of the molded laminate include the followings: a member for automobile interior applications such as an instrument panel, a console box, a meter cover, a door lock bezel, a steering wheel, a power winder switch base, a center cluster and a dash board; a member for automobile exterior applications such as a weather strip, a bumper, a bumper guard, a side mud guard, a body panel, a spoiler, a front grille, a strut mount, a wheel cap, a center pillar, a door mirror, a center ornament, a side molding, a door molding, a window molding, a window, a head lamp cover, a tail lamp cover and windshield parts; a front panel, a button, an emblem and a surface decorative material for an AV device, an OA device or furniture product; a housing, a display window and a button of a cell phone; furniture exterior materials; construction interior materials such as a wall, a ceiling and a floor; construction exterior materials such as an external wall (e.g., siding), a fence, a roof, a gate and a verge-board; surface decorative materials for furniture such as a window frame, a door, a handrail, a door sill and a head jamb; an optical member such as various displays, lenses, mirrors, goggles and window glasses; a member for interior and exterior applications in various vehicles other than automobile such as an electric train, an airplane and a boat; various packaging containers and materials such as a bottle, a cosmetic container and an accessory case; and miscellaneous goods such as a premium and a small article.

EXAMPLES

The invention is further explained in view of the following Examples and Comparative Examples. Before those examples, each preparation example and various evaluation methods of a polymer blend of the rubber-containing polymer ($G_Y$), the acrylic resin composition (Y), the vinylidene fluoride-based resin (F), and the acrylic resin ($A_F$) are explained. Incidentally, in Examples and Comparative Examples, and Table 1, the description "parts" means "parts by mass", unless specifically described otherwise.

<Preparation Examples 1 to 4>

[Preparation Example 1] Preparation of the rubber-containing polymer ($G_Y$-1)

After adding 10.8 parts of deionized water to a vessel equipped with a stirrer, the monomer mixture (c-1) consisting of 0.3 part of MMA (methyl methacrylate), 4.5 parts of n-BA (n-butyl acrylate), 0.2 part of BDMA (1,3-butylene glycol dimethacrylate), and 0.05 part of AMA (allyl methacrylate) and 0.025 part of CHP (cumene hydroperoxide) were added followed by mixing under stirring at room temperature. Subsequently, under stirring, 1.3 parts of an emulsifying agent (trade name "PHOSPHANOL RS610NA", manufactured by TOHO Chemical Industry Co., Ltd.) was added to the vessel, and by continuing the stirring for 20 minutes, an emulsion was prepared. Incidentally, the polymer obtained by polymerizing the above monomer mixture (c-1) only has Tg of -48°C.
Next, to a vessel equipped with a condenser, 139.2 parts of deionized water was added, and the liquid temperature was raised to 75°C. Furthermore, a mixture prepared by adding 0.20 part of sodium formaldehyde sulfoxylate, 0.0001 part of ferrous sulfate, and 0.0003 part of EDTA (ethylene diamine tetraacetic acid) to 5 parts of deionized water was added all at once to the above polymerization vessel. Subsequently, under stirring the liquid in the reaction vessel under nitrogen atmosphere, the above emulsion was added dropwise over 8 minutes to the polymerization vessel, and the reaction was allowed to occur for 15 minutes to complete the first-stage polymerization of the monomer mixture (c).
Subsequently, the monomer mixture (c-2) consisting of 9.6 parts of MMA, 14.4 parts of n-BA, 1.0 part of BDMA 1.0 part, and 0.25 part of AMA 0.25 was added dropwise over 90 minutes to the polymerization vessel together with 0.016 part of CHP. The reaction was allowed to occur for 60 minutes to complete the second-stage polymerization of the monomer mixture (c). Accordingly, the polymer (P1-1) was obtained. Incidentally, the polymer obtained by polymerizing the above monomer mixture (c-2) only has Tg of -10°C.
Subsequently, the monomer mixture (i-1) consisting of 6 parts of MMA, 4 parts of MA (methyl acrylate), and 0.075 part of AMA was added dropwise to the above polymerization vessel over 45 minutes together with 0.0125 part of CHP. The reaction was allowed to occur for 60 minutes. Accordingly, the polymer (P2-1) was obtained. Incidentally, the polymer obtained by polymerizing the above monomer mixture (i-1) only has Tg of 60°C.
Subsequently, the monomer mixture (g-1) consisting of 57 parts of MMA, 3 parts of MA, and 0.264 part of n-OM (n-octyl mercaptan) was added dropwise to the above polymerization vessel over 140 minutes together with 0.075 part of t-BH (tertiary butyl hydroperoxide). The reaction was allowed to occur for 60 minutes. Accordingly, the monomer mixture (g-1) was graft-polymerized to the above polymer to obtain a latex of the rubber-containing polymer ($G_Y$-1). Incidentally, the polymer obtained by polymerizing the above monomer mixture (g-1) only has Tg of 99°C.
The obtained latex of the rubber-containing polymer ($G_Y$-1) was filtered by using a vibration type filtering device equipped with a mesh (average pore size: 62 $\mu$m) made of SUS (stainless steel) as a filtering material. Subsequently, the filtrate was precipitated in an aqueous solution containing 3.5 parts of calcium acetate followed by washing and collecting. The collected hydrous product was dried to obtain the rubber-containing polymer ($G_Y$-1) in powder form. Gel content ratio of the rubber-containing polymer ($G_Y$-1) was 70% by mass, and the mass average particle diameter was 0.11 $\mu$m.

[Preparation Example 2] Preparation of the acrylic resin composition (Y-1)

75 parts of the rubber-containing polymer (G$_Y$-1), 25 parts of MMA/MA copolymer (MMA/MA = 99/1 (mass ratio), mass average molecular weight of Mw: 100,000, Tg glass transition temperature: 105°C, reduction viscosity: 0.059 L/g) as the thermoplastic polymer (B$_Y$), 1.4 parts of a ultraviolet absorbing agent (manufactured by BASF Japan, trade name "TINUVIN 234"), 0.3 part of a hindered amine-based light stabilizer (manufactured by BASF Japan, trade name "CHIMASSORB 2020 FDL", molecular weight of 2600 to 3400), and 0.1 part of a phenol-based anti-oxidant (manufactured by BASF Japan, trade name "IRGANOX 1076") were admixed with one another by using a Henschel mixer. The obtained mixture was supplied to a bent type twin screw extruder (manufactured by TOSHIBA MACHINE CO., LTD., trade name "TEM-35B") which has been heated to 200 to 240°C followed by kneading to obtain pellets of the acrylic resin composition (Y-1). Gel content ratio of the acrylic resin composition (Y-1) was 55% by mass.

[Preparation Example 3] Preparation of raw material for surface layer

68 parts of "KF Polymer T#850" (trade name, ratio of heterogeneous bond: 8.3%, crystal melting point of 173°C) manufactured by KUREHA CORPORATION as the vinylidene fluoride-based resin (F), 32 parts of MMA/MA copolymer (MMA/MA = 99/1 (mass ratio), mass average molecular weight of Mw: 100,000, Tg glass transition temperature: 105°C) as the acrylic resin (A$_F$), and 0.1 part of "ADEKASTAB AO-60" (trade name, manufactured by ADEKA CORPORATION) as an anti-oxidant were admixed with one another by using a Henschel mixer. The obtained mixture was supplied to a bent type twin screw extruder (manufactured by TOSHIBA MACHINE CO., LTD., trade name "TEM-35B") which has been heated to 180 to 220°C followed by kneading to obtain pellets of a raw material for surface layer (i.e., resin composition for forming a surface layer).

[Preparation Example 4] Preparation of reactive HALS copolymer

To a polymerization vessel equipped with a condenser, a mixture containing 92 parts of MMA, 3 parts of MA, 5 parts of ADEKASTAB LA-82, 0.4 part of n-OM, 0.12 part of AMBN (2,2'-azobis (2-methylbutyronitrile)), 0.02 part of MMA/methacrylate salt/methacrylic acid ethyl sulfonate salt copolymer (mass composition ratio = 30/10/69), 0.01 part of sodium sulfate, and 127 parts of deionized water was added. The atmosphere inside the polymerization vessel was sufficiently substituted with nitrogen gas, and after that the liquid inside the polymerization vessel was heated to 75°C under stirring, the polymerization reaction was allowed to occur under nitrogen gas atmosphere. 2 hours later, the liquid inside the polymerization vessel was heated to 95°C, and by maintaining it for 60 minutes, the polymerization was completed. The obtained polymer beads were dehydrated and dried to obtain a reactive HALS copolymer which has mass average molecular weight of 16100.

<Evaluation method>

Methods for evaluating the yellowness, weather resistance, appearance, and chemical resistance of a laminate film are as described below.

(1) Yellowness of laminate film

For the laminate film, yellowness $YI_0$ was measured according to the method described in JIS K7105, 6. 3 by using a spectrophotometric colorimeter (manufactured by NIHON DENKI KOGYO Co., Ltd., trade name: SE2000). Furthermore, for the laminate film which has been kept for 500 hours in an atmosphere with temperature of 100°C, yellowness $YI_{500}$ was also measured in the same manner as above.

(2) Weather resistance of laminate film

The laminate film was measured, as a UV cutting property, for the light transmittance $T_0$ (%) at wavelength of 323 nm using a UV - Visible- near IR spectrophotometer (manufactured by JASCO Corporation, model V-630). Furthermore, the laminate film was exposed to light till to have integrated light amount of 1080 MJ/m$^2$ by using an ultra accelerated weathering tester (manufactured by Iwasaki Electric Co., Ltd., product name: SUV-F1), and the light transmittance $T_{1080}$ (%) was measured for the laminate film in the same manner as above.

(3) Appearance of laminate film

Appearance of the laminate film was observed with a naked eye, and 4-step evaluation was made based on the following criteria.

++: Thermally degraded product and bleed out were not observed.
+: Only the bleed out was observed.
-: Only the thermally degraded product was observed.
--: Both the thermally degraded product and bleed out were observed.

(4) Chemical resistance of laminate film

On top of a laminate film, an aqueous solution of lactic acid with concentration of 10% by mass was added dropwise. After allowing it to stand for 24 hours at a temperature of 80°C, the appearance of the laminate film was observed with a naked eye, and the chemical resistance of the laminate film was evaluated according to the following criteria.

+: Dissolution and swelling were not observed.
-: One or both of dissolution and welling was observed.

(5) Sticking to roll during production of laminate film

Compared to the production of a laminate film in which the layer (Y) contains no hindered amine-based light stabilizer in Comparative Example 2, the state of sticking to a roll was evaluated.

+: Sticking to roll was equivalent to the case of Comparative Example 2.
-: Sticking to roll was more significant than Comparative Example 2.

[Example 1]

A multi-manifold die was installed on a tip part of a single screw extruder 1 and a single screw extruder 2. The pellets of the acrylic resin composition (Y-1) which have been obtained from Preparation Example 2 were supplied to a single screw extruder 1 which has cylinder temperature of 230 to 240°C and a cylinder diameter of 40 mm followed by melt plasticization. Furthermore, the pellets for a surface layer which have been obtained from Preparation Example 3 were supplied to a single screw extruder 2 which has cylinder temperature of 200 to 230°C and a cylinder diameter of 30 mm followed by melt plasticization. In addition, both melt plasticized products were supplied to a multi-manifold die which has been heated to 250°C to obtain a laminate film. Incidentally, by having the temperature of a cooling roll at 90°C and preparing the acrylic resin composition (Y-1) to be contact with a cooling roll at that time, a laminate film was obtained. Results of evaluating the yellowness, weather resistance, appearance, and chemical resistance of a laminate film are shown in Table 1. The laminate film has surface layer thickness of 12.5 $\mu$m and the acrylic resin composition (Y-1) layer thickness of 112.5 $\mu$m.

[Examples 2 to 17 and Comparative Examples 1 and 2]

A laminate film was obtained in the same manner as Example 1 except that the composition of a layer including the vinylidene fluoride-based resin (F) and the composition of the layer of the acrylic resin composition (Y) are modified to those described in Table 1 or Table 2. The evaluation results are described in Table 1 or Table 2. Incidentally, conditions for producing the laminate film of Comparative Example 1 are different in that the layer (Y) does not contain a hindered amine-based light stabilizer with molecular weight of 1400 or more, but contains a hindered amine-based light stabilizer with molecular weight of less than 1400. Conditions for producing the laminate film of Comparative Example 2 are different in that the layer (Y) does not contain any hindered amine-based light stabilizer.

[Comparative Example 3]

Without using pellets for a surface layer, a single screw extruder 2, and a multi-manifold die, a T die was installed on top of the tip of a single screw extruder 1. Other than that, a monolayer film consisting only of the layer of the acrylic resin composition (Y) was obtained in the same manner as Comparative Example 1. The evaluation results are shown in Table 2.

[Discussions]

The laminate film of Comparative Example 1 was insufficient in terms of the yellowness after heating. The laminate film of Comparative Example 2 had high light transmittance at wavelength of 323 nm and an insufficient UV cutting property after the weather resistance test. The monolayer film of Comparative Example 3 has no layer including the vinylidene fluoride-based resin (F), and thus, even in a case in which the acrylic resin composition (Y) includes a hindered amine-based light stabilizer with molecular weight of less than 1400, the chemical resistance was insufficient although coloration derived from de-fluorination reaction of a vinylidene fluoride-based resin did not occur.

[Table 1]

Table 1

| | | | Unit | Example 1 | Example 2 | Example 3 | Example 4 | Example 5 | Example 6 | Example 7 | Example 8 | Example 9 | Example 10 |
|---|---|---|---|---|---|---|---|---|---|---|---|---|---|
| Layer including (F) | Resin (F) | KF polymer T#850 | parts | 68 | | | | | | | | | |
| | Acrylic resin ($A_F$) | BR-80 | parts | 32 | | | | | | | | | |
| | Anti-oxidant | ADEKASTAB AO-60 | parts | 0.1 | | | | | | | | | |
| Layer (Y) | Rubber-containing polymer ($G_Y$) | | parts | 75 | | | | | | | | | |
| | Thermoplastic polymer ($B_Y$) | | parts | 25 | | | | | | | | | |
| | UV absorbing agent | TINUVIN 234 | parts | 1.4 | | | | | | | | | |
| | Light stabilizer | CHIMASSORB 2020 FDL (Molecular weight 2600 to 3400) | parts | 0.3 | 0 | 0 | 0 | 0 | 0 | 0 | 0.1 | 0.2 | 1 |
| | | Uvinul 5050 H (Molecular weight 3000 to 4000) | parts | 0 | 0.3 | 0 | 0 | 0 | 0 | 0 | 0 | 0 | 0 |
| | | CYASORB UV-3346 (Molecular weight 1600 ± 10%) | parts | 0 | 0 | 0.3 | 0 | 0 | 0 | 0 | 0 | 0 | 0 |
| | | CYASORB UV-3529 (Molecular weight 1700 ± 10%) | parts | 0 | 0 | 0 | 0.3 | 0 | 0 | 0 | 0 | 0 | 0 |
| | | TINUVIN NOR 371 FF (Molecular weight 2800 to 4000) | parts | 0 | 0 | 0 | 0 | 0.3 | 0 | 0 | 0 | 0 | 0 |
| | | CHIMASSORB 944 FDL (Molecular weight 2000 to 3100) | parts | 0 | 0 | 0 | 0 | 0 | 0.3 | 0 | 0 | 0 | 0 |
| | | FLAMESTAB NOR 116 FF (Molecular weight 2261) | parts | 0 | 0 | 0 | 0 | 0 | 0 | 0.3 | 0 | 0 | 0 |
| | | ADEKASTAB LA-57 (Molecular weight 791) | parts | 0 | 0 | 0 | 0 | 0 | 0 | 0 | 0 | 0 | 0 |
| | | Reactive HALS copolymer (Molecular weight 16100) | parts | 0 | 0 | 0 | 0 | 0 | 0 | 0 | 0 | 0 | 0 |
| | Anti-oxidant | Irganox 1076 | parts | 0.1 | | | | | | | | | |
| Yellowness | $YI_0$ | | - | 1.2 | 1.1 | 1.3 | 1.2 | 1.2 | 1.5 | 1.2 | 1.0 | 1.1 | 1.4 |
| | $YI_{500}$ | | - | 1.9 | 2.2 | 2.4 | 2.3 | 2.3 | 2.9 | 3.3 | 1.4 | 1.5 | 2.3 |
| | $\Delta YI = YI_{500} - YI_0$ | | - | 0.7 | 1.1 | 1.1 | 1.1 | 1.1 | 1.4 | 2.1 | 0.4 | 0.4 | 0.9 |
| Light transmittance | $T_0$ | | % | <0.1 | <0.1 | <0.1 | <0.1 | <0.1 | <0.1 | <0.1 | <0.1 | <0.1 | <0.1 |
| | $T_{1080}$ | | % | 0.2 | 0.4 | 0.3 | 0.3 | 0.5 | 0.4 | 0.3 | 2.3 | 0.9 | 0.3 |
| Film appearance | | | - | ++ | ++ | ++ | ++ | ++ | ++ | ++ | ++ | ++ | ++ |
| Chemical resistance | | | - | + | + | + | + | + | + | + | + | + | + |
| Sticking to roll | | | - | + | + | − | − | + | + | + | + | + | + |

[Table 2]

Table 2

| | | | Unit | Example 11 | Example 12 | Example 13 | Example 14 | Example 15 | Example 16 | Example 17 | Comparative Example 1 | Comparative Example 2 | Comparative Example 3 |
|---|---|---|---|---|---|---|---|---|---|---|---|---|---|
| Layer including (F) | Resin (F) | KF polymer T#850 | parts | 68 | | | | | 78 | 62 | 68 | | - |
| | Acrylic resin ($A_F$) | BR-80 | parts | 32 | | | | | 22 | 38 | 32 | | - |
| | Anti-oxidant | ADEKASTAB AO-60 | parts | 0.1 | | | | | | | | | - |
| Layer (Y) | Rubber-containing polymer ($G_Y$) | | parts | 75 | | | | | | | | | |
| | Thermoplastic polymer ($B_Y$) | | parts | 25 | | | | | | | | | |
| | UV absorbing agent | TINUVIN 234 | parts | 1.4 | | | | | | | | | |
| | Light stabilizer | CHIMASSORB 2020 FDL (Molecular weight 2600 to 3400) | parts | 0 | 0 | 0 | 10 | 0 | 0.3 | 0.3 | 0 | 0 | 0 |
| | | Uvinul 5050 H (Molecular weight 3000 to 4000) | parts | 0.1 | 0.2 | 1 | 0 | 0 | 0 | 0 | 0 | 0 | 0 |
| | | CYASORB UV-3346 (Molecular weight 1600 ± 10%) | parts | 0 | 0 | 0 | 0 | 0 | 0 | 0 | 0 | 0 | 0 |
| | | CYASORB UV-3529 (Molecular weight 1700 ± 10%) | parts | 0 | 0 | 0 | 0 | 0 | 0 | 0 | 0 | 0 | 0 |
| | | TINUVIN NOR 371 FF (Molecular weight 2800 to 4000) | parts | 0 | 0 | 0 | 0 | 0 | 0 | 0 | 0 | 0 | 0 |
| | | CHIMASSORB 944 FDL (Molecular weight 2000 to 3100) | parts | 0 | 0 | 0 | 0 | 0 | 0 | 0 | 0 | 0 | 0 |
| | | FLAMESTAB NOR 116 FF (Molecular weight 2261) | parts | 0 | 0 | 0 | 0 | 0 | 0 | 0 | 0 | 0 | 0 |
| | | ADEKASTAB LA-57 (Molecular weight 791) | parts | 0 | 0 | 0 | 0 | 0 | 0 | 0 | 0.3 | 0 | 0.3 |
| | | Reactive HALS copolymer (Molecular weight 16100) | parts | 0 | 0 | 0 | 0 | 6 | 0 | 0 | 0 | 0 | 0 |
| | Anti-oxidant | Irganox 1076 | parts | 0.1 | | | | | | | | | |
| Yellowness | YI$_0$ | | - | 1.1 | 1.1 | 1.4 | 5.0 | 1.1 | 2.2 | 1.1 | 1.2 | 1.1 | 1.0 |
| | YI$_{500}$ | | - | 1.6 | 1.8 | 2.8 | 6.8 | 1.9 | 3.0 | 1.8 | 5.0 | 1.6 | 1.1 |
| | $\Delta YI = YI_{500} - YI_0$ | | - | 0.5 | 0.7 | 1.4 | 1.8 | 0.8 | 0.8 | 0.7 | 3.8 | 0.5 | 0.1 |
| Light transmittance | $T_0$ | | % | <0.1 | <0.1 | <0.1 | <0.1 | <0.1 | <0.1 | <0.1 | <0.1 | <0.1 | <0.1 |
| | $T_{1080}$ | | % | 4.6 | 2.8 | 0.3 | 0.1 | 1.2 | 0.2 | 0.2 | 0.7 | 25.3 | 0.6 |
| Film appearance | | | - | ++ | ++ | ++ | + | ++ | ++ | ++ | ++ | ++ | ++ |
| Chemical resistance | | | - | + | + | + | + | + | + | + | + | + | - |
| Sticking to roll | | | - | + | + | + | + | + | + | + | + | + | + |

**Claims**

1. A laminate film comprising a surface layer including a vinylidene fluoride-based resin (F) and a layer of an acrylic resin composition (Y), wherein the acrylic resin composition (Y) contains a hindered amine-based light stabilizer having a molecular weight of 1400 or more.

2. The laminate film according to claim 1, wherein the surface layer additionally includes an acrylic resin ($A_F$).

3. The laminate film according to claim 1, wherein the surface layer additionally includes an acrylic resin ($A_F$), content ratio of the vinylidene fluoride-based resin (F) in total 100% by mass of the vinylidene fluoride-based resin (F) and the acrylic resin ($A_F$) in the surface layer is 62% by mass or more, and content ratio of the acrylic resin ($A_F$) is 38% by mass or less.

4. The laminate film according to claim 1, wherein the surface layer additionally includes an acrylic resin ($A_F$), content ratio of the vinylidene fluoride-based resin (F) in total 100% by mass of the vinylidene fluoride-based resin (F) and the acrylic resin ($A_F$) in the surface layer is 62% by mass or more and 78% by mass or less, and content ratio of the acrylic resin ($A_F$) is 22% by mass or more and 38% by mass or less.

5. The laminate film according to any one of claims 1 to 4, wherein content ratio of the hindered amine-based light stabilizer in the acrylic resin composition (Y) is 0.1 to 5 parts by mass relative to 100 parts by mass of a resin component in the acrylic resin composition (Y).

6. The laminate film according to any one of claims 1 to 4, wherein the molecular weight of the hindered amine-based light stabilizer is 2000 or more.

7. The laminate film according to any one of claims 1 to 4, wherein the molecular weight of the hindered amine-based light stabilizer is 2400 or more.

8. The laminate film according to any one of claims 1 to 4, wherein 10% mass reduction temperature of the hindered amine-based light stabilizer is 380°C or higher based on thermogravimetric analysis.

9. The laminate film according to any one of claims 1 to 4, wherein the hindered amine-based light stabilizer has, in the molecular structure, a piperidine skeleton and an amino group other than the piperidine skeleton.

10. The laminate film according to claim 9, wherein the amino group is an amino group derived from a tertiary amine.

11. The laminate film according to any one of claims 1 to 4, wherein the hindered amine-based light stabilizer is a copolymer of a reactive hindered amine-based light stabilizer.

12. The laminate film according to any one of claims 1 to 4, wherein the acrylic resin composition (Y) additionally contains a hindered amine-based light stabilizer having a molecular weight of less than 1400, and content ratio of the hindered amine-based light stabilizer relative to 100 parts by mass of a resin component in the acrylic resin composition (Y) is 1 part by mass or less.

13. The laminate film according to any one of claims 1 to 4, wherein the surface layer additionally contains a hindered amine-based light stabilizer, and content ratio of the hindered amine-based light stabilizer relative to 100 parts by mass of a resin component in the surface layer is 0.1 part by mass or less.

14. A molded laminate comprising a base and the laminate film according to any one of claims 1 to 4 that is laminated on the base.

15. A method for producing a molded laminate, comprising:

    a step for producing a preliminary molded article by vacuum molding or pressure molding the laminate film according to any one of claims 1 to 4 in a first die; and
    a step for integrating the preliminary molded article and a base by injection molding a resin that is to be the base in a second die.

16. A laminate film comprising a surface layer including a vinylidene fluoride-based resin (F) and a layer of an acrylic resin composition (Y),
   wherein an increase amount of yellowness ($\Delta$YI) after heating for 500 hours in an atmosphere with temperature of 100°C is 3.0 or less when compared to before heating, and
   light transmittance $T_{1080}$ at wavelength of 323 nm after having exposure till to have integrated light amount of 1080 MJ/m$^2$ by using an ultra accelerated weathering tester (manufactured by Iwasaki Electric Co., Ltd., product name: SUV-F1) is 20% or less.

**INTERNATIONAL SEARCH REPORT**

| International application No. |
|---|
| PCT/JP2015/072778 |

A. CLASSIFICATION OF SUBJECT MATTER
*B32B27/18*(2006.01)i, *B29C45/14*(2006.01)i, *B29C69/00*(2006.01)i, *B32B7/02* (2006.01)i, *B32B27/30*(2006.01)i

According to International Patent Classification (IPC) or to both national classification and IPC

B. FIELDS SEARCHED

Minimum documentation searched (classification system followed by classification symbols)
B32B1/00-B32B43/00, B29C45/14

Documentation searched other than minimum documentation to the extent that such documents are included in the fields searched
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | WO 2013/039119 A1 (Mitsubishi Rayon Co., Ltd.), 21 March 2013 (21.03.2013), claims 1 to 2; paragraphs [0008] to [0009], [0017] to [0019], [0035] to [0036], [0038], [0050], [0052], [0128], [0132] & US 2014/0342162 A1 claims 1 to 2; paragraphs [0010] to [0011], [0026] to [0028], [0044] to [0045], [0047], [0059], [0061], [0137], [0141] & EP 2756950 A1 & CN 103930275 A & KR 10-2014-0060355 A | 1-6,12-16<br>7,11 |
| X<br>Y | JP 2002-90516 A (Nippon Carbide Industries Co., Inc.), 27 March 2002 (27.03.2002), paragraphs [0016], [0044] (Family: none) | 1,5-7,11-13, 16<br>7 |

☒ Further documents are listed in the continuation of Box C. ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02 November 2015 (02.11.15) | 10 November 2015 (10.11.15) |

| Name and mailing address of the ISA/<br>Japan Patent Office<br>3-4-3,Kasumigaseki,Chiyoda-ku,<br>Tokyo 100-8915,Japan | Authorized officer |
|---|---|
| | Telephone No. |

Form PCT/ISA/210 (second sheet) (July 2009)

**INTERNATIONAL SEARCH REPORT**

International application No.

PCT/JP2015/072778

C (Continuation). DOCUMENTS CONSIDERED TO BE RELEVANT

| Category* | Citation of document, with indication, where appropriate, of the relevant passages | Relevant to claim No. |
|---|---|---|
| Y | JP 5-249352 A (Asahi Chemical Industry Co., Ltd.), 28 September 1993 (28.09.1993), paragraphs [0002] to [0003], [0005], [0007], [0015] (Family: none) | 7 |
| Y | JP 2008-231307 A (Mitsubishi Rayon Co., Ltd.), 02 October 2008 (02.10.2008), claim 1; paragraphs [0011] to [0017], [0024] (Family: none) | 11 |
| X | JP 2001-315255 A (Mitsubishi Plastics, Inc.), 13 November 2001 (13.11.2001), claims 1 to 2; paragraphs [0016], [0018], [0027], [0036] to [0037], [0040], [0053] to [0054], [0056], [0061], [0064], [0067] to [0072] (Family: none) | 1-14,16 |

Form PCT/ISA/210 (continuation of second sheet) (July 2009)

**EP 3 181 355 A1**

**Patent documents cited in the description**

- JP 3288640 A

- JP 2013104022 A